# EUROPEAN PATENT APPLICATION

(11) **EP 4 354 635 A1**
(43) Date of publication of application: **17.04.2024**
(21) Application number: 22921429.1
(22) Date of filing: 01.07.2022
(51) Int. Cl.: H01M 50/507, H01M 50/204

(54) **BUSBAR ASSEMBLY, BATTERY AND POWER CONSUMING DEVICE**

(30) Priority: 18.01.2022 CN 202220131916 U
(71) Applicant: Contemporary Amperex Technology Co., Limited, Ningde, Fujian 352100 (CN)
(72) Inventor: MIAO, Huimin, Ningde, Fujian 352100 (CN)
(74) Representative: Thoma, Michael
(86) International application number: PCT/CN2022/103411
(87) International publication number: WO 2023/137998

(57) **Abstract**

The disclosure relates to a busbar assembly (30), a battery (20) and an electric device (10). A busbar assembly (30) includes a busbar (100) and a plurality of insulation covers (200), and the respective insulation covers (200) are connected end to end and wrap around the busbar (100). A battery (20) includes a plurality of battery modules and the above-mentioned busbar assembly (30), and the respective battery modules are connected by the busbar assembly (30). An electric device (10) includes the above-mentioned battery (20). The above-mentioned busbar assembly (30), battery (20) and electric device (10), with the insulation covers (200) wrapping around the busbar (100), may effectively improve the insulation performance of the busbar assembly (30), avoid the risk that the user accidentally touches the busbar (100) and gets electric shock, and improve the use safety of the battery (20). The respective insulation covers (200) may be sequentially connected to adapt to a busbar (100) of a different length, and have wide applicability.

## Description

### CROSS-REFERENCE

The disclosure refers to Chinese Patent Application No. 202220131916.0 entitled "BUSBAR ASSEMBLY, BATTERY, AND ELECTRIC DEVICE" filed on January 18, 2022, which are incorporated by reference in its entirety into this disclosure.

### TECHNICAL FIELD

The present disclosure relates to the technology field of battery preparation, and more particularly, relates to a busbar assembly, battery, and electric device.

### BACKGROUND

A battery includes a plurality of battery modules, and the electrical connection between the plurality of battery modules is realized through a busbar. In order to ensure the use safety of the battery and prevent the risk that the user accidentally touches the busbar and gets electric shock, the busbar should be insulated. In some solutions, the busbar provides insulation protection with an insulation layer coating the surface of the busbar. However, the insulation layer on the surface of the busbar is easy to be scratched or fall off during use, which makes part of the busbar to fail to provide insulation protection, and the user might accidentally touch the part and get electric shock. This leads to greater security risk of the battery.

### SUMMARY

In view of this, the present disclosure discloses a busbar assembly, a battery and an electric device.

A busbar assembly includes a busbar and a plurality of insulation covers, and the respective insulation covers are connected end to end and wrap around the busbar. The above busbar assembly with the insulation covers wrapping around it may effectively improve the insulation performance of the busbar assembly, avoid the risk that the user accidentally touches the busbar and gets electric shock, and improve the use safety of the battery. The respective insulation covers may be sequentially connected to adapt to a busbar of a different length, and have wide applicability.

In some of the embodiments, the respective insulation covers are plug-fit with each other. This arrangement facilitates the quick disassembly and assembly of the respective insulation covers, and helps improving the assembly efficiency of the busbar assembly.

In some of the embodiments, a rear portion of one of the insulation covers at least partly covers a head portion of another adjacent insulation cover. Through this arrangement, the busbar is effectively prevented from being exposed due to the gap at the junction of the respective insulation covers, the risk that the user accidentally touches the exposed busbar and gets electric shock is reduced, and the respective insulation covers are connected smoothly.

In some of the embodiments, a rear portion of one of the insulation covers is provided with a slot, a head portion of another adjacent insulation cover is provided with a protrusion, and the protrusion is limited in the slot. Through the arrangement, through the engagement of the protrusion with the slot, the two adjacent insulation covers are effectively fixed when being plug-fit, and the stability and reliability of the structural connection between the respective insulation covers are effectively ensured.

In some of the embodiments, the slot includes a slide slot and a limit slot which are in communication with each other, the protrusion includes connected guide portion and limit portion, the guide portion is movably disposed in the slide slot, and the limit portion is limited in the limit slot to limit a movement range of the guide portion. By using the engagement of the limit portion and the limit slot to limit the movement range of the guide portion, the two adjacent insulation covers are prevented from being separated, and the plug-fit fixation and the position limit of the two adjacent insulation covers are realized.

In some of the embodiments, the slide slot and the limit slot are arranged on an inner wall of the insulation cover, the slide slot runs through an edge of the rear portion of the insulation cover, and the limit slot is spaced from the edge of the rear portion of the insulation cover. Through the arrangement, the plug-fit fixation and the position limit of the two adjacent insulation covers may be realized, and the risk of the limit portion slipping out of the limit slot may be reduced.

In some of the embodiments, different sides of the guide portion are respectively provided with one limit portion, and the limit portion is arranged at an angle to the guide portion. This arrangement makes the structure design simple and reasonable, and may effectively prevent the limit portion from slipping out of the limit slot.

In some of the embodiments, each of the insulation covers includes at least two connected connection segments, and an inner diameter of one connection segment located at the rear portion is equal to an outer diameter of one connection segment located at the head portion. This arrangement facilitates the smooth connection of the respective insulation covers and helps improving the assembly efficiency of the busbar assembly.

In some of the embodiments, each of the connection segments detachably covers a periphery of the busbar. This arrangement facilitates the quick disassembly and assembly of the insulation cover, and helps improving the assembly efficiency of the busbar assembly.

In some of the embodiments, each connection segment includes a first insulation portion, a transition portion and a second insulation portion, a first side of the first insulation portion and a first side of the second insulation portion are connected by the transition portion, and a second side of the first insulation portion and a second side of the second insulation portion are snap-fit. Through this arrangement, each connection segment may be folded to wrap around the busbar, and then the second side of the first insulation portion and the second side of the second insulation portion may be snap-fit to make the connection segment fixed without coming loose, effectively reducing the number of insulation parts and the assembly processes.

In some of the embodiments, the second side of the first insulation portion is provided with a first snap, the second side of the second insulation portion is provided with a second snap, and the first snap and the second snap are snap-fit. This arrangement facilitates the quick disassembly and assembly of the insulation cover, and helps improving the assembly efficiency of the busbar assembly.

In some of the embodiments, the second side of the first insulation portion or the second side of the first insulation portion is provided with a limit rib, and the limit rib is located on an outside of the first snap or the second snap. This arrangement further prevents the first snap and the second snap from coming loose when snap-fit.

In some of the embodiments, the transition portion includes connected first transition segment and second transition segment, and a thickness of the second transition segment is less than a thickness of the first transition segment. This arrangement enables the connection segment to be easily folded without cracking, and ensures the insulation protection of the busbar.

In some of the embodiments, the number of the first transition segments is two, and the two first transition segments are connected perpendicularly to the first insulation portion and the second insulation portion respectively, and the second transition segment is disposed between the two first transition segments. This arrangement enables the connection segment to be easily folded without cracking, and ensures the insulation protection of the busbar.

In some of the embodiments, each of the insulation covers is a one-piece structure. Through this arrangement, the insulation covers will not crack when being folded and have good integrity.

A battery includes a plurality of battery modules and the above-mentioned busbar assembly. The above-mentioned battery with the busbar being connected between two adjacent battery modules may have the plurality of battery modules connected in series or in parallel.

An electric device includes the above-mentioned battery. The above electric device has a good insulation effect of the busbar assembly in the battery and can improve the insulation protection of the battery.

### BRIEF DESCRIPTION OF THE DRAWINGS

In order to more clearly explain the technical solutions in the embodiments of the present disclosure or in the prior art, the following provides a brief description of the attached drawings necessary in the embodiments of this disclosure or in the prior art. Obviously, the drawings described below are only some embodiments of the present disclosure, and other drawings may also be obtained according to these drawings by those skilled in the art without paying creative labor.
FIG. 1 is a schematic diagram of an electric device in one embodiment;
FIG. 2 is a schematic diagram of a busbar assembly in one embodiment;
FIG. 3 is an axonometric diagram of an insulation cover in the busbar assembly shown in FIG. 2;
FIG. 4 is a back view of the insulation cover shown in FIG. 3;
FIG. 5 is a side view of the insulation cover shown in FIG. 3.

The reference numbers are as follows:
10. vehicle; 11, controller; 12, motor; 20, battery; 30, busbar assembly; 100, busbar; 200, insulation cover; 201, connection segment; 201a, first connection segment; 201b, second connection segment; 201c, third connection segment; 202, first insulation portion; 202a, first snap; 203, transition portion; 203a, first transition segment; 203b, second transition segment; 204, second insulation portion; 204a, second snap; 205, limit rib; 210, slot; 211, slide slot; 212, limit slot; 220, protrusion; 221, guide portion; 222, limit portion.

### DETAILED DESCRIPTION OF THE EMBODIMENTS

In order to make the above purposes, characteristics and advantages of this disclosure more obvious and easy to understand, the following explains the specific implementation of this disclosure in detail by combining with the attached drawings. Many specific details are set forth in the following description to facilitate a full understanding of the disclosure. However, the disclosure may be implemented in many ways different from those described herein, and those skilled in the art may make similar improvements without departing from the spirit of the disclosure. Therefore, the disclosure is not limited by the specific embodiments disclosed below.

It is understood that, in the description of this disclosure, the terms "center", "longitudinal", "lateral", "length", "width", "thickness", "up", "down", "front", "back", "left", "right", "vertical" "horizontal", "top", "bottom", "inside", "outside", "clockwise", "anticlockwise", "axial", "radial", "circumferential" and etc. indicates a location or position relationship which is the location or position relationship shown in the drawings. They are used only for the convenience of describing and simplifying the description of the disclosure, and not to indicate or imply that the device or element referred to must have a specific orientation, or be constructed and operated in a specific orientation, and therefore cannot be construed as a limitation of the disclosure.

Besides, the terms "first", "second" are used only for a purpose of description and cannot be construed as indicating or implying relative importance or as implicitly indicating the quantity of the indicated technical features. Therefore, the feature defined with "first", "second" indicates or implies at least one such feature. In the description of the disclosure, "multiple" means more than two, such as two, three, unless otherwise specified.

In the disclosure, unless otherwise expressly specified and limited, the terms "installation", "connection", "linkage", "fixation" and etc. shall be construed in a broad sense, for example, it may be a fixed connection, or a detachable connection, or a one-piece integration; it may be a mechanical connection or an electrical connection; it may be a direct connection, also may be an indirect connection through an intermediate medium, and it may be the connection within two components or an interaction between two components. For those skilled in the art, the specific meaning of the above terms in the disclosure may be understood on a case-by-case basis, unless otherwise expressly specified.

In this disclosure, unless otherwise expressly specified and limited, a first feature being "above" or "below" a second feature may mean that the first and second features are in direct contact, or the first and second features indirectly contact through an intermediate medium. Furthermore, the first feature being "above", "over" and "on top of" the second feature may mean that the first feature is directly above or obliquely above the second feature, or merely indicate that the first feature is at a higher level than the second feature. The first feature being "below", "beneath" and "under" the second feature may mean that the first feature is directly below or obliquely below the second feature, or merely indicate that the first feature is at a lower level than the second feature.

It should be noted that when a component is said to be "fixed on" or "disposed on" another component, it may be directly on the another component or there may be an intermediate component. When a component is said to be "connected" to another component, it may be directly connected to the another component or there may also be an intermediate component. The terms "vertical", "horizontal", "up", "down", "left", "right", and similar expressions used herein are for a purpose of illustration only and are not meant to be the only implementation.

With the popularization and promotion of new energy vehicles, the safety and reliability of the new energy vehicles have increasingly received concerns and attention. Being rechargeable batteries, power batteries are the power source of new energy vehicles, and have wide applications in the field of new energy vehicles.

A battery includes a plurality of battery modules, and the electrical connection between the plurality of battery modules is realized through a busbar. In order to ensure the use safety of the battery and prevent the risk that the user accidentally touches the busbar and gets electric shock, the busbar should be insulated. In some solutions, the busbar provides insulation protection with an insulation layer coating the surface of the busbar. However, the insulation layer on the surface of the busbar is easy to be scratched or fall off during use, which makes part of the busbar to fail to provide insulation protection, and the user might accidentally touch the part and get electric shock. This leads to greater security risk of the battery. Therefore, how to effectively ensure the insulation protection of the busbar in the battery is an urgent problem to be solved.

In view of the above, a busbar assembly is designed, which may effectively improve the insulation protection performance of the battery.

It should be noted that the battery mentioned in the disclosure refers to a single physical module including one or more battery cells to provide a higher voltage and capacity. For example, the battery mentioned in the disclosure may include a battery pack, etc.

To meet different power demands, the battery may include multiple battery cells. In this case, the multiple battery cells may be connected in series or in parallel or in series and parallel. Connection in series and parallel refers to the mixture of the connections in series and in parallel. In one embodiment, multiple battery cells may first be connected in series or in parallel or in series and parallel to form a battery module, and multiple battery modules may then be connected in series or in parallel or in series and parallel to form a battery. That is, the multiple battery cells may directly form a battery, or may first form battery modules, which then form a battery. The battery is further arranged in an electric device to provide electrical energy for the electric device.

Battery cells in this disclosure may include a lithium-ion secondary battery, a lithium-ion primary battery, a lithium-sulfur battery, a sodium-lithium-ion battery, a sodium-ion battery, or a magnesium-ion battery, etc., to which the embodiments of this disclosure constitute no limitation. Battery cells may be cylindrical, flat, rectangular or in other shapes, to which the embodiments of this disclosure constitute no limitation either. Battery cells are generally grouped into three types according to their packaging: cylindrical battery cell, prismatic battery cell and pouch battery cell, to which the embodiments of this disclosure constitute not limitation as well.

A battery cell includes an electrode assembly and electrolyte, where the electrode assembly is composed of a positive electrode sheet, a negative electrode sheet and a separator. Battery cells work primarily based on the metal ions shuttling between the positive and negative electrode sheets. The positive electrode sheet includes a positive electrode current collector and a positive electrode active material layer, the positive electrode active material layer is coated on the surface of the positive electrode current collector, a positive electrode current collect uncoated with the positive electrode active material layer protrudes from the current collector coated with the positive electrode active material layer, and the current collector uncoated with the positive electrode active material layer acts as a positive electrode tab. Take a lithium-ion battery as an example, the material of the positive electrode current collector may be aluminum, and the positive electrode active material may be lithium cobaltate, lithium iron phosphate, ternary lithium or lithium manganate. The negative electrode sheet includes a negative electrode current collector and a negative electrode active material layer, the negative electrode active material layer is coated on the surface of the negative electrode current collector, a current collector not coated with the negative electrode active material layer protrudes from the current collector coated with the negative electrode active material layer, and the current collector not coated with the negative electrode active material layer acts as a negative electrode tab. The material of the negative electrode current collector may be copper, and the negative electrode active material may be carbon or silicon, etc. To ensure that no melting will be resulted from a large through current, the number of the positive electrode tabs is multiple and they are stacked together, and the number of the negative electrode tabs is multiple and they are stacked together. The material of the separator may be polypropylene (PP) or polyethylene (PE), etc. In addition, the electrode assembly may be a winding structure or a stacked structure, to which the embodiments of this disclosure constitute no limitation.

The disclosure provides an electric device using a battery as a power source. The electric device may be but not limited to a mobile phone, a tablet, a laptop computer, an electric toy, an electric tool, an electric vehicle, an electric car, a ship, a spacecraft, etc. Among them, electric toys may include a fixed or movable electric toy, such as a game console, an electric car toy, an electric ship toy and an electric aircraft toy, etc. Spacecrafts may include an aircraft, a rocket, a space shuttle and a spacecraft and so on.

In the following embodiments, for the convenience of illustration, an electric device, which is a vehicle 10, of an embodiment of this disclosure is taken as an example to illustrate.

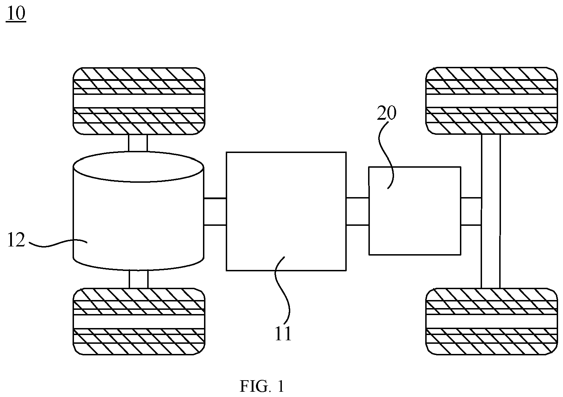

Please refer to FIG. 1, which is a schematic structure diagram of a vehicle 10 provided in some embodiments of the disclosure. The vehicle 10 may be a fuel vehicle, a gas vehicle or a new energy vehicle, and the new energy vehicle may be a pure electric vehicle, a hybrid electric vehicle or an extended-range vehicle, etc. A battery 20 is arranged inside the vehicle 10, and the battery 20 may be disposed at the bottom, the head or the rear of the vehicle 10. The battery 20 may be used to power the vehicle 10, for example, the battery 20 may be used as an operational power supply of the vehicle 10. The vehicle 10 may also include a controller 11 and a motor 12, where the controller 11 is used to control the battery 20 to power the motor 12, for example, for supplying power necessary during the starting, the navigation, and the travel of the vehicle 10.

In some embodiments of the disclosure, the battery 20 may be used not only as an operational power supply of the vehicle 10, but also as a drive power supply of the vehicle 10, to provide drive power to the vehicle 10 in place or partly in place of fuel or natural gas.

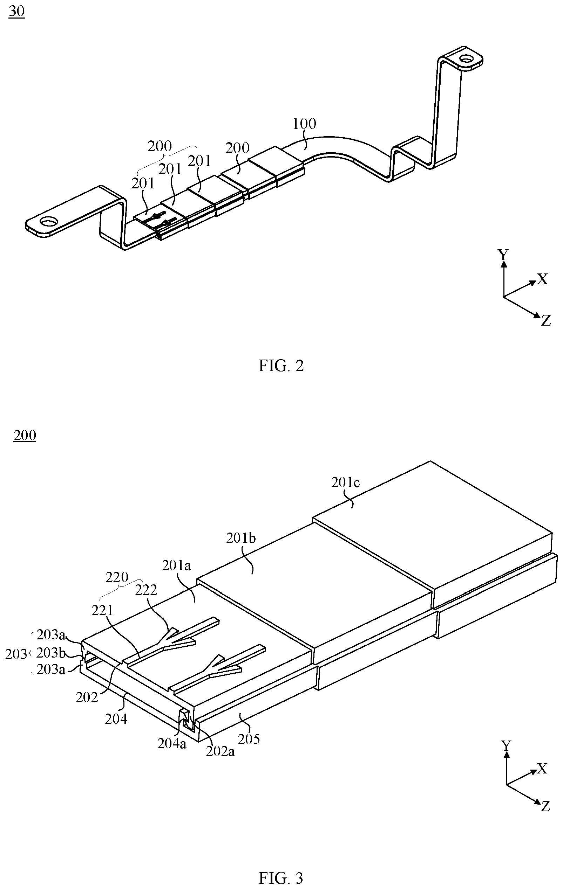

Please refer to FIG. 2, a busbar assembly 30 in an embodiment includes a busbar 100 and a plurality of insulation covers 200. The respective insulation covers 200 are connected end to end and wrap around the busbar 100.

Through the above arrangement of wrapping the insulation covers 200 around the busbar 100, the insulation performance of the busbar assembly 30 may be effectively improved, the risk that the user accidentally touches the busbar 100 and gets electric shock is avoided, and the use safety of the battery 20 is improved. The respective insulation covers 200 may be sequentially connected to adapt to a busbar 100 of a different length, and have wide applicability.

In a specific implementation, the busbar 100 is a copper bar, whose two ends are respectively connected with a battery 20 module, and the series connection or the parallel connection between a plurality of battery 20 modules is realized through the copper bar. The busbar 100 may be straight or L-shaped or shaped as practically required. The specific shape of busbar 100 is not limited here.

In a specific implementation, the insulation covers 200 may be made of at least one of polyformaldehyde, nylon, polypropylene or phenolic resins and formed by injection molding. The above materials have short-term thermostability at 160 °C ~ 480 °C, also have high strength and surface hardness, and may meet the need for wear resistance without addition of wear-resistant materials, which effectively decreases the operation processes and reduces the costs.

In the embodiment shown in FIG. 2, the respective insulation covers 200 are plug-fit with each other. This arrangement facilitates the quick disassembly and assembly of the respective insulation covers 200, and helps improving the assembly efficiency of the busbar assembly 30.

In other embodiments, the respective insulation covers 200 may be connected in other manner than plug-fit. For example, the respective insulation covers 200 may be provided with a magnetic element inside, and the respective insulation covers 200 are connected end to end through the magnetic attraction. Alternatively, the respective insulation covers 200 may also be connected end to end through adhesive.

In the embodiment, as shown in FIG. 2, the rear portion of one insulation cover 200 at least partially covers the head portion of another adjacent insulation cover 200. Through this arrangement, the busbar 100 is effectively prevented from being exposed due to the gap at the junction of the respective insulation covers 200, the risk that the user accidentally touches the exposed busbar 100 and gets electric shock is reduced, and the respective insulation covers 200 are connected smoothly.

It should be understood that, as shown in FIG. 2, in case where the rear portion of one insulation cover 200 at least partially covers the head portion of another adjacent insulation cover 200, the two adjacent insulation covers 200 are easily separated from each other if they are not effectively positioned. In view of the above, in the implementation shown in FIG. 1, the rear portion of one insulation cover 200 is provided with a slot 210, and the head portion of another adjacent insulation cover 200 is provided with a protrusion 220, where the protrusion is limited in the slot 210.

Through the arrangement, through the engagement of the protrusion 220 with the slot 210, the two adjacent insulation covers 200 are effectively fixed when being plug-fit, and the stability and reliability of the structural connection between the respective insulation covers 200 are effectively ensured.

In other implementations, the protrusion 220 may also be provided at the rear portion of one insulation cover 200, and the slot 210 may be provided at the head portion of another adjacent insulation cover 200.

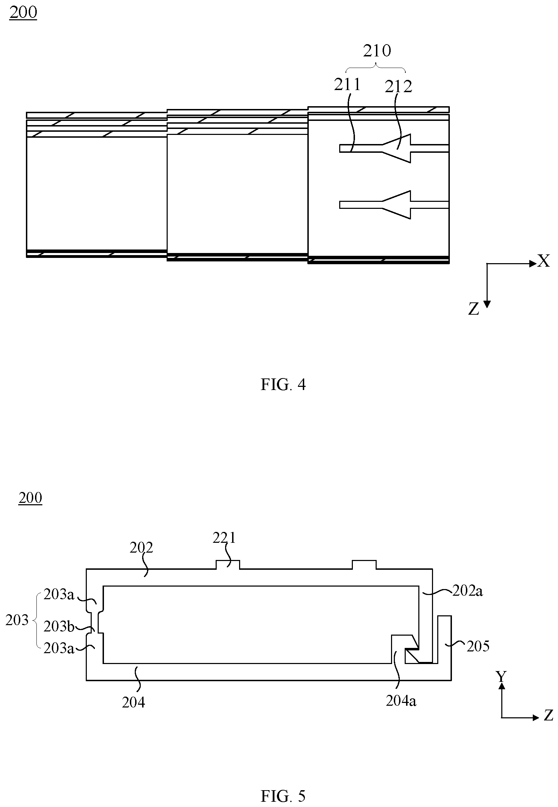

In this implementation, as shown in FIGS. 3 and 4, the slot 210 includes a slide slot 211 and a limit slot 212 which are in communication with each other, and the protrusion 220 includes connected guide portion 221 and limit portion 222, where the guide portion 221 is movably disposed in the slide slot 211, and the limit portion 222 is limited in the limit slot 212, which limits the movement range of the guide portion 221.

It should be noted here that during assembly of two adjacent insulation covers 200, the limit portion 222 is limited in the limit slot 212 and the guide portion 221 is movably disposed in the slide slot 211. The guide portion 221 of another adjacent insulation cover 200 can slide along a slide slot 211 of one insulation cover 200. By using the engagement of the limit portion 222 and the limit slot 212 to limit the movement range of the guide portion 221, the two adjacent insulation covers 200 are prevented from being separated, and the plug-fit fixation and the position limit of the two adjacent insulation covers 200 are realized.

In the implementation shown in FIG. 4, the slide slot 211 and the limit slot 212 are arranged on the inner wall of the insulation cover 200.

In this implementation, the slide slot 211 runs through the edge of the rear portion of the insulation cover 200, and the limit slot 212 is spaced from the edge of the rear portion of the insulation cover 200.

It is understood that in case where the limit slot 212 runs through the edge of the rear portion of the insulation cover 200, there is a risk that the limit portion 222 might slip out of the limit slot 212, which cannot ensure that the two insulation covers 200 are not separated. Through the above arrangement, the plug-fit fixation and the position limit of the two adjacent insulation covers 200 may be realized, and the risk of the limit portion 222 slipping out of the limit slot 212 may be reduced.

In the implementation shown in FIG. 3, a limit portion 222 is provided on each side of the guide portion 221, and the limit portion 222 is disposed at an angle to the guide portion 221. This arrangement makes the structure design simple and reasonable, and may effectively prevent the limit portion 222 from slipping out of the limit slot 212.

In this implementation, as shown in FIG. 4, the limit slot 212 is also triangular in shape to fit with the limit portion 222.

In this implementation, as shown in FIG. 3 and FIG. 4, the limit portion 222 is disposed at an angle to the guide portion 221, and the limit slot 212 is triangular in shape. In other implementations, the limit portion 222 and the guide portion 221 may also be disposed to be coaxial or perpendicular to each other, and the limit slot 212 may also be in other shapes. For example, the limit portion 222 may also be circular and the limit portion 222 is disposed on one side of the guide portion 221. The circular limit slot 212 may also limit the movement range of the guide portion 221 through the engagement of the limit portion 222 and the limit slot 212.

In the implementation, the guide portion 221 is straight and the slide slot 211 is also straight to fit the guide portion 221. In other implementations, the guide portion 221 may also be curved or otherwise shaped, and the slide slot 211 may also be curved or otherwise shaped.

In the embodiment shown in FIG. 2, each insulation cover 200 includes at least two connecting connection segments 201, and the inner diameter of one connection segment 201 at the rear portion is equal to the outer diameter of one connection segment 201 at the head portion. This arrangement facilitates the smooth connection of the respective insulation covers 200 and helps improving the assembly efficiency of the busbar assembly 30.

In the embodiment, as shown in FIG. 2, each insulation cover 200 has a gradually changing inner diameter, and one connection segment 201 at the rear portion of one insulation cover 200 at least partly covers one connection segment 201 at the head portion of another adjacent insulation cover 200.

For example, as shown in FIG. 3, each insulation cover 200 includes sequentially connected first connection segment 201a, second connection segment 201b and third connection segment 201c, with the first connection segment 201a located at the head portion and the third connection segment 201c located at the rear portion. The inner diameter of the third connection segment 201c at the rear portion is equal to the outer diameter of the first connection segment 201a at the head portion. In this case, the third connection segment 201c of one insulation cover 200 at least partly covers the first connection segment 201a of another adjacent insulation cover 200, so that the respective insulation covers 200 are plug-fit end to end.

In the implementation, each insulation cover 200 is a one-piece structure, that is, each connection segment 201 is one-piece. This arrangement allows good integrity and high mechanical strength. In other implementations, each connection segment 201 may also be a structure of pieces connected by adhesive means.

In the implementation shown in FIG. 3, each connection segment 201 detachably covers the periphery of the busbar 100. This arrangement facilitates the quick disassembly and assembly of the insulation cover 200, and helps improving the assembly efficiency of the busbar assembly 30.

In other implementations, each connection segment 201 may also be adhered to the periphery of the busbar 100 by adhesive means.

In the implementation, as shown in FIG. 3, each connection segment 201 includes a first insulation portion 202, a transition portion 203 and a second insulation portion 204. A first side of the first insulation portion 202 and a first side of the second insulation portion 204 are connected by the transition portion 203, and a second side of the first insulation portion 202 and a second side of the second insulation portion 204 are snap-fit.

It is understood that each connection segment 201 may be folded to wrap around the busbar 100, and then the second side of the first insulation portion 202 and the second side of the second insulation portion 204 may be snap-fit to make the connection segment 201 fixed without coming loose, effectively reducing the number of insulation parts and the assembly processes.

In the implementation, since busbar 100 is plate-shaped, the first insulation portion 202 and the second insulation portion 204 are rectangular plate-shaped in order to be better adhered to the surface of the busbar 100. In other implementations, the first insulation portion 202 and the second insulation portion 204 may also be round or in other shapes.

In the implementation shown in FIG. 3, the second side of the first insulation portion 202 is provided with a first snap 202a, the second side of the second insulation portion 204 is provided with a second snap 204a, and the first snap 202a and the second snap 204a are snap-fit. This arrangement facilitates the quick disassembly and assembly of the insulation cover 200, and helps improving the assembly efficiency of the busbar assembly 30.

In the implementation, as shown in FIG. 5, the first snap 202a and the second snap 204a are hook-shaped, which effectively prevents the first snap 202a and the second snap 204a from coming loose when they are snap-fit.

In one embodiment, in the implementation as shown in FIG. 5, the second side of the first insulation portion 202 or the second side of the first insulation portion 202 are provided with a limit rib 205, which is located on the outside of the first snap 202a or the second snap 204a. This arrangement further prevents the first snap 202a and the second snap 204a from coming loose when snap-fit.

For example, in the implementation shown in FIG. 5, the first snap 202a is snap-fit at the outside of the second snap 204a, and the limit rib 205 is located on the outside of the first snap 202a. During assembly, the first snap 202a is inserted between the limit rib 205 and the second snap 204a, and the limit rib 205 is allowed to bend and deform to a certain extent. After the first snap 202a and the second snap 204a are assembled in place, the limit rib 205 will be restored to its original shape under its own stress, to limit the first snap 202a from disengagement.

In other implementations, the second snap 204a may be snap-fit at the outside of the first snap 202a, and the limit rib 205 is located on the outside of the second snap 204a.

In other implementations, the first snap 202a may also be replaced with a bump, and the second snap 204a may also be replaced with a recess matching the bump. The engagement of the bump and the recess realizes the snap-fit of the second side of the first insulation portion 202 and the second side of the second insulation portion 204.

Moreover, in one embodiment, as shown in FIG. 5, the transition portion 203 includes connected first transition segment 203a and second transition segment 203b, where the thickness of the second transition segment 203b is less than the thickness of the first transition segment 203a. This arrangement enables the connection segment 201 to be easily folded without cracking, and ensures the insulation protection of the busbar 100.

In the implementation, the thickness of the second transition segment 203b is 0.5 times the thickness of the first transition segment 203a. In case where the insulation cover 200 wraps around the busbar 100, the transition portion 203 may meet the requirement that it will not crack after being folded many times. In other implementations, the thickness of the second transition segment 203b may also be other multiples of the thickness of the first transition segment 203a.

In the implementation shown in FIG. 5, the number of the first transition segments 203a is two. The two first transition segments 203a are connected perpendicularly to the first insulation portion 202 and the second insulation portion 204, respectively, and the second transition portion 203b is disposed between the two first transition segments 203a.

This arrangement not only makes the connection between the transition portion 203 and the first and second insulation portions 202, 204 be firmly established, but also enables the transition portion 203 to meet the requirement that it will not crack after being folded many times.

In the implementation, each insulation cover 200 is a one-piece structure, that is, the first insulation portion 202, the transition portion 203 and the second insulation portion 204 are one-piece. This arrangement allows good integrity and high mechanical strength. In other implementations, the first insulation portion 202, the transition portion 203 and the second insulation portion 204 may also be structures of pieces connected by adhesive means.

Please refer to FIG. 2 and FIG. 1. In one embodiment, the battery 20 includes a plurality of battery 20 modules and the above-mentioned busbar assembly 30, where the respective battery 20 modules are connected by the busbar assembly 30. Through this arrangement, by connecting the busbar 100 between two adjacent battery 20 modules, the plurality of battery 20 modules can be connected in series or in parallel.

In a specific implementation, the busbar 100 is connected between the high-voltage outputs of the two adjacent battery 20 modules to realize the conduction between the circuits of the two battery 20 modules.

Please refer to FIG 1. In one embodiment, the electric device includes the above-mentioned battery 20, which is used to supply electrical energy. This arrangement allows a good insulation effect of the busbar assembly 30 in the battery 20 and can improve the insulation protection of the battery 20.

According to some embodiments of this disclosure, as shown in FIG. 2 and FIG. 3, this disclosure provides a busbar assembly 30. The busbar assembly 30 includes a busbar 100 and a plurality of insulation covers 200, where the respective insulation covers 200 are plug-fit end to end and wrap around the busbar 100. The rear portion of one insulation cover 200 is provided with a slot 210, which includes a slide slot 211 and a limit slot 212 which are in communication with each other. The head portion of another adjacent insulation cover 200 is provided with a protrusion 220, which includes connected guide portion 221 and limit portion 222. The guide portion 221 is movably disposed in the slide slot 211, and the limit portion 222 is limited in the limit slot 212, which limits the movement range of the guide portion 221.

In this case, each insulation cover 200 is a one-piece structure, and each insulation cover 200 includes at least two connected connection segments 201, where the inner diameter of one connection segment 201 located at the rear portion is equal to the outer diameter of one connection segment 201 located at the head portion. Each connection segment 201 includes the first insulation portion 202, the transition portion 203 and the second insulation portion 204, where the first side of the first insulation portion 202 and the first side of the second insulation portion 204 are connected by the transition portion 203, the second side of the first insulation portion 202 is provided with the first snap 202a, the second side of the second insulation portion 204 is provided with the second snap 204a, and the first snap 202a and the second snap 204a are snap-fit. The second side of the first insulation portion 202 or the second side of the first insulation portion 202 is provided with a limit rib 205, and the limit rib 205 is located on the outside of the first snap 202a or the second snap 204a. The transition portion 203 includes connected first transition segment 203a and second transition segment 203b, where the thickness of the second transition segment 203b is 0.5 times the thickness of the first transition segment 203a.

According to some embodiments of the disclosure, as shown in FIG. 1 and FIG. 2, the disclosure provides a battery 20 including a plurality of battery 20 modules and the above-mentioned busbar assembly 30, where the respective battery 20 modules are connected by the busbar assembly 30.

According to some embodiments of the disclosure, as shown in FIG. 1, the disclosure provides an electric device including the above-mentioned battery 20, where the battery 20 is used to supply electrical energy.

The technical features of the above embodiments may be combined at will. In order to make the description concise, not all possible combinations of the respective technical features of the above embodiments are described. However, as long as there is no contradiction in the combination of these technical features, they should be considered to be within the scope of this specification.

The above embodiments have only expressed several implementations of this disclosure, whose descriptions are relatively specific and detailed, but they cannot therefore be understood as limitations to the scope of the disclosure. It should be noted that it is possible to make several variations and improvements for ordinary technical personnel in the field without deviating from the concept of this disclosure, and these are all within the scope of protection of this disclosure. Therefore, the protection scope of this disclosure shall be subject to the attached claims.

## Claims

1. A busbar assembly (30) comprises:
a busbar (100); and
a plurality of insulation covers (200), the respective insulation covers (200) are connected end to end and wrap around the busbar (100).

2. The busbar assembly (30) according to claim 1, wherein the respective insulation covers (200) are plug-fit with each other.

3. The busbar assembly (30) according to any one of claims 1-2, wherein a rear portion of one of the insulation covers (200) at least partly covers a head portion of another adjacent insulation cover (200).

4. The busbar assembly (30) according to any one of claims 1-3, wherein a rear portion of one of the insulation covers (200) is provided with a slot (210), a head portion of another adjacent insulation cover (200) is provided with a protrusion (220), and the protrusion (220) is limited in the slot (210).

5. The busbar assembly (30) according to claim 4, wherein the slot (210) comprises a slide slot (211) and a limit slot (212) which are in communication with each other, the protrusion (220) comprises connected guide portion (221) and limit portion (222), the guide portion (221) is movably disposed in the slide slot (211), and the limit portion (222) is limited in the limit slot (212) to limit a movement range of the guide portion (221).

6. The busbar assembly (30) according to claim 5, wherein the slide slot (211) and the limit slot (212) are arranged on an inner wall of the insulation cover (200), the slide slot (211) runs through an edge of the rear portion of the insulation cover (200), and the limit slot (212) is spaced from the edge of the rear portion of the insulation cover (200).

7. The busbar assembly (30) according to claim 5, wherein different sides of the guide portion (221) are respectively provided with one said limit portion (222), and the limit portion (222) is arranged at an angle to the guide portion (221).

8. The busbar assembly (30) according to any one of claims 1-3, wherein each of the insulation covers (200) comprises at least two connected connection segments (201), and an inner diameter of one of the connection segments (201) located at the rear portion is equal to an outer diameter of one of the connection segments (201) located at the head portion.

9. The busbar assembly (30) according to claim 8, wherein each of the connection segments (201) detachably covers a periphery of the busbar (100).

10. The busbar assembly (30) according to claim 9, wherein each of the connection segments (201) comprises a first insulation portion (202), a transition portion (203) and a second insulation portion (204), a first side of the first insulation portion (202) and a first side of the second insulation portion (204) are connected by the transition portion (203), and a second side of the first insulation portion (202) and a second side of the second insulation portion (204) are snap-fit.

11. The busbar assembly (30) according to claim 10, wherein the second side of the first insulation portion (202) is provided with a first snap (202a), the second side of the second insulation portion (204) is provided with a second snap (204a), and the first snap (202a) and the second snap (204a) are snap-fit.

12. The busbar assembly (30) according to claim 11, wherein the second side of the first insulation portion (202) or the second side of the first insulation portion (202) is provided with a limit rib (205), and the limit rib (205) is located on an outside of the first snap (202a) or the second snap (204a).

13. The busbar assembly (30) according to claim 10, wherein the transition portion (203) comprises connected first transition segment (203a) and second transition segment (203b), and a thickness of the second transition segment (203b) is less than a thickness of the first transition segment (203a).

14. The busbar assembly (30) according to claim 13, wherein number of the first transition segments (203a) is two, and the two first transition segments (203a) are connected perpendicularly to the first insulation portion (202) and the second insulation portion (204) respectively, and the second transition segment (203b) is disposed between the two first transition segments (203a).

15. The busbar assembly (30) according to any one of claims 1-14, wherein each of the insulation covers (200) is a one-piece structure.

16. A battery (20) comprising:
a plurality of battery modules; and
a busbar assembly (30) according to any one of claims 1-15, the respective battery modules are connected by the busbar assembly (30).

17. An electric device (10) comprising the battery (20) according to claim 16.
